# EUROPÄISCHE PATENTSCHRIFT

(11) **EP 0 999 624 B1**
(45) Veröffentlichungstag und Bekanntmachung des Hinweises auf die Patenterteilung: **18.02.2009**
(21) Anmeldenummer: 99117087.9
(22) Anmeldetag: 31.08.1999
(51) Int. Cl.: H02B 13/035

(54) **Gasisolierte Schaltanlage**
Gas-insulated switchgear
Installation de commutation à gaz isolant

(30) Priorität: 04.11.1998 DE 19850694
(43) Veröffentlichungstag der Anmeldung: 10.05.2000
(73) Patentinhaber: AREVA Sachsenwerk GmbH, 93055 Regensburg (DE)
(72) Erfinder: Reichl, Erwin, Dipl.-Ing.(FH), 93105 Tegernheim (DE)
(74) Vertreter: Dreiss, Fuhlendorf, Steimle & Becker

(56) Entgegenhaltungen:
- DE-A- 1 490 673
- DE-U- 6 917 852
- FR-A- 1 499 052

## Beschreibung

Die vorliegende Erfindung betrifft eine gasisolierte Schaltanlage, insbesondere für mehrphasige Mittelspannungen, mit mindestens zwei nebeneinander angeordneten Schaltfeldanordnungen, die jeweils einen mit Isoliergas gefüllten gasdichten Gasbehälter aufweisen, in dem Schaltelemente und mindestens eine Stromschiene angeordnet sind, wobei die Gasbehälter von benachbarten Schaltfeldanordnungen über mindestens eine mechanische Verbindungsstelle gasdicht miteinander verbunden sind.

Eine Schaltanlage mit den Merkmalen des Oberbegriffs des Anspruchs 1 ist in FR 1 499 052 offenbart.
Gasisolierte Schaltanlagen werden aus mehreren nebeneinander angeordneten Schaltfeldanordnungen aufgebaut. Unter einer Schaltfeldanordnung wird nachfolgend sowohl ein einzelnes Schaltfeld als auch ein Schaltfeldblock (auch Schaltfeldmodul genannt) verstanden. Ein Schaltfeld weist ein oder mehrere Schaltelemente, bspw. Leistungsschalter, Trennschalter oder Erdungsschalter, und Stromschienen auf. In einem Schaltfeldblock sind mehrere Schaltfelder zusammengeschlossen. Ein Schaltfeld beinhaltet lediglich eine Abzweigungsfunktion, wohingegen ein Schaltfeldblock mehrere Abzweigungsfunktionen beinhaltet. Die einzelnen Schaltfeldanordnungen sind mittels der Stromschienen, die dann als Sammelschienen ausgebildet sind, miteinander elektrisch leitend verbunden. Die Gasbehälter der Schaltfeldanordnungen können in gasdichte Schotträume unterteilt sein, in denen jeweils eines oder mehrere Schaltelemente und/oder Stromschienen angeordnet sind. In diesem Fall sind die Stromschienen als Verbindungsleitungen ausgebildet, die zwischen den Schotträumen verlaufen und Schaltelemente miteinander und/oder mit Sammelschienen verbinden.

Jeweils zwei benachbarte Schaltfeldanordnungen sind üblicherweise mittels Verbindungselemente in einem bestimmten Abstand zueinander festgelegt. Die Verbindungselemente müssen so ausgestaltet sein, dass die Gasbehälter der beiden nebeneinander angeordneten Schaltfeldanordnungen fest und sicher miteinander verbunden sind. Parallel zu den Verbindungselementen sind zwischen zwei benachbarten Schaltfeldanordnungen die mechanischen Verbindungsstellen angeordnet. An den mechanischen Verbindungsstellen muß eine gasdichte Verbindung zwischen den Gasbehältern der beiden Schaltfeldanordnungen gewährleistet werden, so dass bei miteinander verbundenen Gasbehältern die gesamte Schaltanlage einschließlich der mechanischen Verbindungsstellen mit Isoliergas befüllt werden kann. Die Stromschienen von benachbarten Schaltfeldanordnungen sind an elektrischen Verbindungsstellen miteinander elektrisch leitend verbunden. Aus Gründen der Isolation liegen die elektrischen Verbindungsstellen üblicherweise innerhalb der mechanischen Verbindungsstellen und sind bei einer fertig montierten Schaltanlage von Isoliergas umgeben.

Aus dem Stand der Technik sind nebeneinander angeordnete Schaltfeldanordnungen bekannt, die rohrförmige Gasbehälter aus massivem Material aufweisen, die im Bereich der mechnischen Verbindungsstellen spanend bearbeitet sind. Durch die spanende Bearbeitung können die mechanischen Verbindungsstellen mit einer hohen Maßgenauigkeit gefertigt werden. Bei nebeneinander angeordneten Gasbehältern einer Schaltanlage ergeben sich somit kaum Probleme bei der Ausrichtung der Gasbehälter zueinander, so lange sie auf einem ebenen Untergrund stehen. Um eine Gasdichtigkeit zwischen zwei miteinander verbundenen Gasbehältern zu gewährleisten, wird zwischen den Wänden der Gasbehälter ein Dichtelement angeordnet, das bei miteinander mechanisch verbundenen Gasbehältern zwischen den sich gegenüberliegenden Wänden der Gasbehälter eingespannt ist. Zum Ausgleich von unterschiedlichen Wärmeausdehnungen der beiden miteinander verbundenen Gasbehälter ist bei der bekannten Schaltanalge in dem Abstand zwischen den Gasbehältern ein nachgiebiger Bereich vorgesehen. Der nachgiebige Bereich erstreckt sich von dem einen Gasbehälter zu dem anderen Gasbehälter. Der nachgiebige Bereich ist derart ausgebildet, daß er Relativbewegungen der Gasbehälter der benachbarten Schaltfeldanordnungen ausgleicht, bei denen sich der Abstand der Gasbehälter verändert. Relativbewegungen der Gasbehälter quer zueinander, bei denen der Abstand der Gasbehälter im wesentlichen konstant bleibt (Versatz), können durch den nachgiebigen Bereich der bekannten Schaltanlage nicht ausgeglichen werden.

Aus dem Stand der Technik sind außerdem Gasbehälter bekannt, die aus Blech in Schweißtechnik hergestellt werden. Die Herstellungskosten solcher Gasbehälter liegen erheblich unter denen für die Gasbehälter aus massivem Material. Bei den aus Blech hergestellten Gasbehältern können die mechanischen Verbindungsstellen nicht spanend bearbeitet werden. Die Gasbehälter aus Blech können deshalb nur mit einer relativ geringen Maßgenauigkeit hergestellt werden. Bei nebeneinander angeordneten, mittels Schweißtechnik hergestellten Gasbehältern ist deshalb häufig kein paralleler Verlauf der gegenüberliegenden Wände der Gasbehälter gegeben. Dann besteht jedoch die Gefahr, daß bei miteinander verbundenen Gasbehältern die mechanische Verbindung nicht gasdicht ist. Außderdem kann bei einem besonders großen Versatz zweier nebeneinander angeordneter Gasbehälter eine Herstellung der mechanischen Verbindung unmöglich sein. Die Probleme des Versatzes ergeben sich zwar insbesondere bei Schaltanlagen mit Schaltfeldanordnungen mit aus Blech in Schweißtechnik gefertigten Gasbehältern. Ein Versatz tritt jedoch auch bei aus beliebigem Material und bei auf beliebige Weise gefertigten Gasbehältern auf.

Der Versatz zwischen zwei nebeneinander angeordneten Gasbehältern kann durch die in dem Abstand zwischen den Gasbehältern angeordneten nachgiebigen Bereiche der bekannten Schaltanlagen nicht bzw. nur unzureichend ausgeglichen werden.

Die Aufgabe der vorliegenden Erfindung besteht deshalb darin, eine Schaltanlage der eingangs genannten Art dahingehend auszugestalten und weiterzubilden, dass zwischen den Gasbehältern von benachbarten Schaltfeldanordnungen auf einfache Weise eine mechanische Verbindung hergestellt werden kann, die eine verspannungsfreie und gasdichte mechanische Verbindung zwischen den Gasbehältern sicherstellt und insbesondere einen Versatz der Gasbehälter zueinander ausgleicht.

Zur Lösung dieser Aufgabe schlägt die Erfindung eine Schaltanlage mit den Merkmalen des Anspruchs 1 vor.

Die erfindungsgemäße Schaltanlage hat entscheidende Vorteile gegenüber dem Stand der Technik. Durch die besonders ausgestalteten Wände der Gasbehälter der Schaltfeldanordnungen können die Relativbewegungen zweier Gasbehälter zueinander, insbesondere der Versatz zwischen den Gasbehältern, ausgeglichen werden. Das bedeutet, dass durch die zumindest teilweise nachgiebig ausgebildete Wand Ungenauigkeiten bei der Fertigung der Gasbehälter und bei der Aufstellung zweier benachbarter Schaltfeldanordnungen ausgeglichen werden können.

Der Ausgleich des Versatzes aufgrund von Ungenauigkeiten bei der Fertigung und der Aufstellung der Gasbehälter ist insbesondere bei Gasbehältern wichtig, die aus Blech und in Schweißtechnik gefertigt sind. Anders als bei den aus dem Stand der Technik bekannten Gasbehältern mit nachgiebigen Bereichen, die aus einem massiven Material bestehen und die im Bereich der mechanischen Verbindungsstellen spanend bearbeitet werden können, ist es bei in Schweißtechnik hergestellten Gasbehältern wesentlich schwieriger, die Gasbehälter maßhaltig herzustellen und bei nebeneinander angeordneten Gasbehältern so aufeinander auszurichten, daß sie keinen Versatz aufweisen und daß die einander gegenüberliegenden Wände parallel zueinander verlaufen. Durch den Ausgleich des Versatzes zweier benachbarter Gasbehälter zueinander können die gegenüberliegenden Wände der Gasbehälter mit einem gleichmäßigen Druck gegeneinander verspannt werden, wodurch eine sichere gasdichte Verbindung zwischen dem Gasbehälter der einen Schaltfeldanordnung und dem Gasbehälter der benachbarten Schaltfeldanordnung sichergestellt werden kann.

Auch Relativbewegungen, bei denen sich der Abstand der zwei miteinander verbundenen Gasbehälter verändert, können bei der erfindungsgemäßen Schaltanlage ausgeglichen werden. Derartige Relativbewegungen können zunächst bei der Montage und später aufgrund von unterschiedlicher Wärmeausdehnung der beiden Gasbehälter oder aufgrund von unterschiedlichen mechanischen Einwirkungen auf die beiden Gasbehälter auftreten. Diese Relativbewegungen, bei denen sich der Abstand zwischen zwei miteinander verbundenen Gasbehältern verändert, sind jedoch vernachlässigbar gering im Vergleich zu dem Versatz der Gasbehälter aufgrund von Herstellungsund Aufstellungsungenauigkeiten.

Da sich der nachgiebige Bereich im wesentlichen in radialer Richtung um die mechanische Verbindungsstellen herum erstreckt, ist der nachgiebige Bereich insbesondere in der Erstreckungsebene der Wände der Gasbehälter nachgiebig ausgebildet. Bei der Ausgestaltung des nachgiebigen Bereichs wird besonderer Wert darauf gelegt, dass der nachgiebige Bereich Behältertoleranzen, Aufstellungsungenauigkeiten und Relativbewegungen in der Erstreckungsebene der Wände des Gasbehälters ausgleichen kann. Gerade diese Ungenauigkeiten im Flanschbereich der Wände und diese Relativbewegungen führen zu großen Verspannungen zwischen miteinander verbundenen Gasbehältern, die mit der Zeit zu Undichtigkeiten oder einfach nur zu hohen mechanischen Belastungen der mechanischen Verbindungsstellen führen.

Bei der erfindungsgemäßen Schaltanlage kann stets eine gleichmäßige Verspannung über die gesamte mechanische Verbindungsstelle und damit stets eine gasdichte Verbindung zwischen miteinander verbundenen Gasbehältern gewährleistet werden. Es ist ausreichend, wenn bei zwei miteinander verbundenen Gasbehältern lediglich die Wand eines der beiden Gasbehälter zumindest teilweise nachgiebig ausgebildet ist.

Gemäß einer vorteilhaften Weiterbildung der vorliegenden Erfindung wird vorgeschlagen, dass der nachgiebige Bereich elastisch nachgiebig ausgebildet ist. Das bedeutet, dass es aufgrund der Relativbewegungen der Gasbehälter zueinander nicht zu einer bleibenden Verformung des nachgiebigen Bereichs kommt.

Es ist denkbar, dass zwischen zwei miteinander zu verbindenden Gasbehältern mehrere mechanische Verbindungsstellen vorgesehen sind. Wenn bspw. jede Leitung der Sammelschiene durch eine gesonderte Öffnung aus dem Gasbehälter heraus geleitet wird, kann um jede dieser Öffnungen herum eine mechanische Verbindungsstelle vorgesehen werden. Gemäß einer bevorzugten Ausführungsform weist die Wand des Gasbehälters der Schaltfeldanordnung einen kranzförmigen nachgiebigen Bereich auf, der um alle mechanischen Verbindungsstellen zwischen den zwei nebeneinander angeordneten Schaltfeldanordnungen herum verläuft. Das hat den Vorteil, dass trotz mehrere mechanischer Verbindungsstellen zwischen zwei Gasbehältern nur ein nachgiebiger Bereich vorgesehen werden muß. Der nachgiebige Bereich umgibt die mechanischen Verbindungsstellen kranzförmig, d. h. er ist in alle Richtungen in der Erstreckungsebene der Wand des Gasbehälters nachgiebig. Zusätzlich kann der kranzförmige nachgiebige Bereich auch Relativbewegungen der beiden Gasbehälter quer zu der Erstreckungsebene der Wand ausgleichen.

Alternativ wird vorgeschlagen, dass die Wand des Gasbehälters der Schaltfeldanordnung um jede mechanische Verbindungstelle zwischen zwei nebeneinander angeordneten Schaltfeldanordnungen herum jeweils einen kranzförmigen nachgiebigen Bereich aufweist. Bei dieser Ausführungsform sind mehrere nachgiebigen Bereiche in der Wand des Gasbehälters vorgesehen, nämlich um jeden mechanische Verbindungsstelle herum ein gesonderter nachgiebiger Bereich. Diese Ausführungsform weist eine besonders hohe Stabilität auf.

Gemäß einer anderen bevorzugten Weiterbildung der Erfindung wird vorgeschlagen, dass der nachgiebige kranzförmige Bereich ein sich radial nach außen erstreckendes wellenförmiges Profil aufweist. Ein solches wellenförmiges Profil kann in vorteilhafter Weise ohne große Kraftanstrengungen bei einer Relativbewegung der Gasbehälter in der Erstreckungsebene der Wand des Gasbehälters auf der einen Seite der mechanischen Verbindungsstelle zusammengedrückt und auf der gegenüberliegenden Seite gestreckt werden. Relativbewegungen können ausgeglichen werden, indem der kranzförmige Bereich auf zwei gegenüberliegenden Seiten der mechanischen Verbindungsstelle zusammengedrückt bzw. gestreckt wird.

Vorteilhafterweise besteht der nachgiebige kranzförmige Bereich aus einem dünnen Blech. Ein solches Material weist einerseits eine ausreichende Stabilität auf, um einem möglicherweise in den Gasbehältern herrschenden Druck des Isoliergases standhalten zu können, und kann andererseits zum Ausgleich der Relativbewegungen ohne große Kraftanstrengungen verformt werden.

Das dünne Blech des nachgiebigen kranzförmigen Bereichs ist vorzugsweise in einer entsprechenden Öffnung der Wand angeordnet und an dem Rand der Öffnung mit der Wand verschweißt. Das dünne Blech des nachgiebigen kranzförmigen Bereichs ist vorteilhafterweise an der mechanischen Verbindungsstelle mit der Wand verschweißt. Alternativ wird vorgeschlagen, dass das dünne Blech des nachgiebigen kranzförmigen Bereichs an der mechanischen Verbindungsstelle an der Wand eingeklemmt ist.

Eine bevorzugte Ausführungsform der vorliegenden Erfindung wird im Folgenden anhand der Zeichnungen näher erläutert. Es zeigen:
- Fig. 1: einen Ausschnitt einer erfindungsgemäßen Schaltanlage schematisch dargestellt in einer Ansicht von vorne;
- Fig. 2: eine Schaltfeldanordnung der erfindungsgemäßen Schaltanlage aus Fig. 1 in einer Seitenansicht;
- Fig. 3: die Schaltfeldanordnung aus Fig. 2 in einer Ansicht im Schnitt von vorne,
- Fig. 4: eine Sammelschiene der Schaltfeldanordnung aus Fig. 3 im Ausschnitt;
- Fig. 5a: eine mechanische Verbindungsstelle der Schaltfeldanordnung aus Fig. 2 im Ausschnitt;
- Fig. 5b: die mechanische Verbindungsstelle aus Fig. 5a im Längsschnitt;
- Fig. 5c: die mechanische Verbindungsstelle aus Fig. 5a im Querschnitt;
- Fig. 6a: eine mechanische Verbindungsstelle der Schaltfeldanordnung aus Fig. 2 im Ausschnitt; und
- Fig. 6b: einen nachgiebigen Bereich einer Wand einer Schaltfeldanordnung.

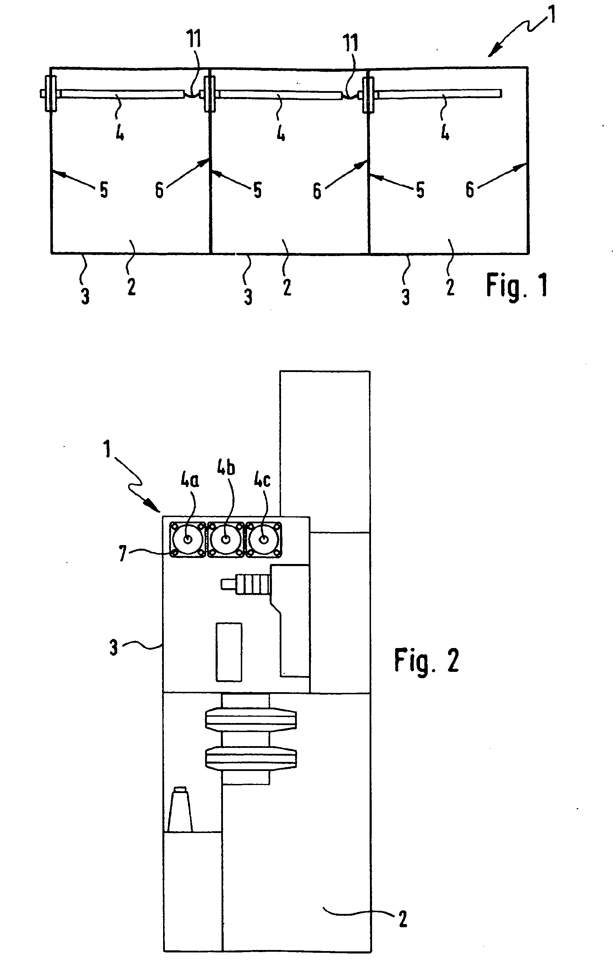

In Fig. 1 ist ein Ausschnitt einer erfindungsgemäßen gasisolierten Schaltanlage dargestellt. Die Schaltanlage ist in ihrer Gesamtheit mit dem Bezugszeichen 1 gekennzeichnet. Die Schaltanlage 1 dient insbesondere zum Übertragen und Schalten von mehrphasigen Mittelspannungen. Sie weist in dem in Fig. 1 dargestellten Ausschnitt drei nebeinander angeordnete Schaltfeldanordnungen 2 auf. Üblicherweise weist eine Schaltanlage 1 im Mittel ca. zehn Schaltfeldanordnungen 2 auf. Die in Fig. 1 dargestellt Schaltanlage 1 ist sowohl linksseitig als auch rechtsseitig ohne Abschluß dargestellt.

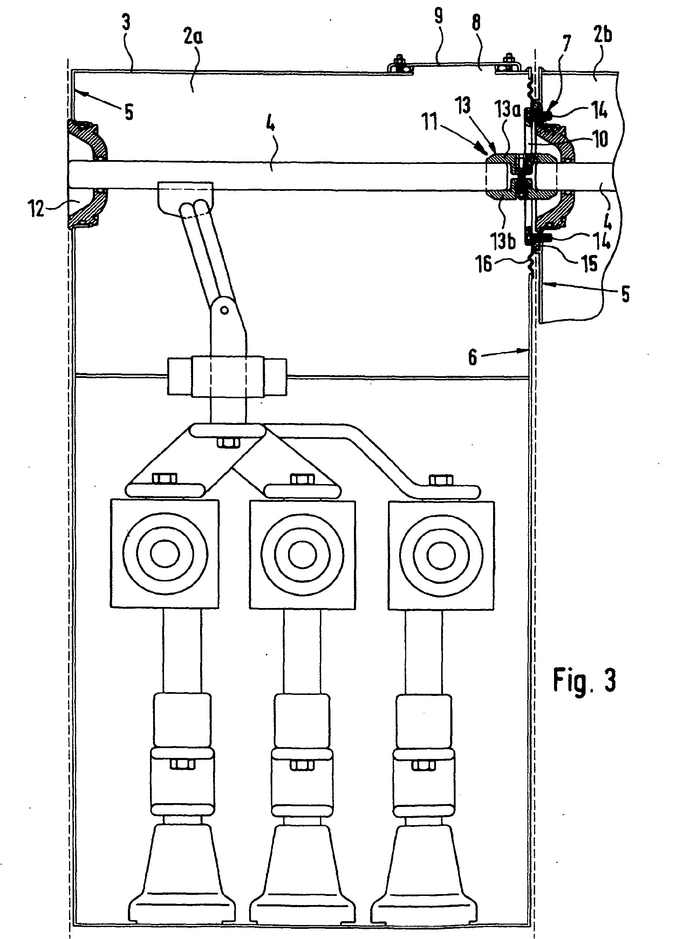

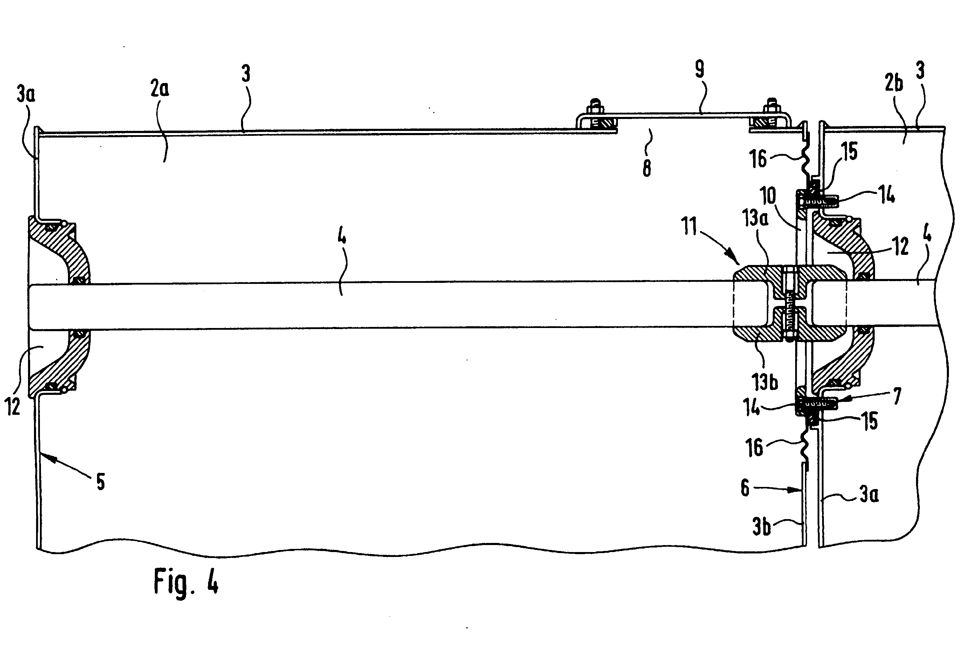

Jede der Schaltfeldanordnungen 2 weist einen gasdichten Gasbehälter 3 auf, in dem Schaltelemente und mindestens eine Sammelschiene 4 angeordnet sind. Zur Isolation der Schaltelemente und der Sammelschienen 4 ist der Gasbehälter 3 mit Isoliergas gefüllt. Die Sammelschienen 4 der Schaltfeldanordnungen 2 weisen für jede Phase der in der Schaltanlage 1 zu schaltenden Spannung eine gesonderte Leitung 4a, 4b, 4c auf (vgl. Fig. 2) . In Fig. 1 sind die einzelnen Leitungen 4a, 4b, 4c in der Zeichenebene hintereinander angeordnet. Benachbarte Schaltfeldanordnungen 2a, 2b (vgl. Fig. 3, Fig. 4) sind an einer mechanischen Verbindungsstelle 7 mechanisch miteinander verbunden. Die Leitungen 4a, 4b, 4c der Sammelschienen 4 der benachbarten Schaltfeldanordnungen 2a, 2b sind an einer elektrischen Verbindungsstelle 11 elektrisch leitend miteinander verbunden.

Zur Herstellung der mechanischen und elektrischen Verbindung zwischen den Gasbehältern 3 zweier benachbarter Schaltfeldanordnungen 2a, 2b weisen die Gasbehälter 3 jeweils eine bei nebeneinander angeordneten Schaltfeldanordnungen 2a, 2b von außen zugängliche Montageöffnung 8 auf, die mit einem Deckel 9 gasdicht verschließbar ist (vgl. Fig. 3 und Fig. 4). Darüber hinaus weisen die Gasbehälter 3 eine Verbindungsöffnung 10 auf, die bei nebeneinander angeordneten Schaltfeldanordnungen 2a, 2b den aus dem Gasbehälter 3 der benachbarten Schaltfeldanordnung 2b herausgeführten Leitungen 4a, 4b, 4c der Sammelschiene 4 zugewandt ist.

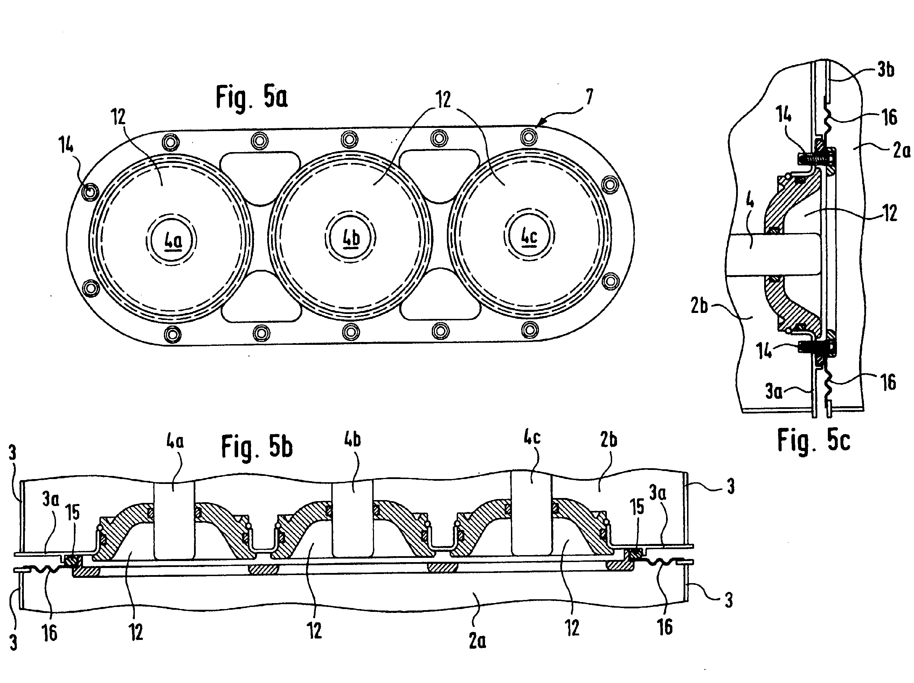

Eine Wand 3a auf der Seite 5 des Gasbehälters 3 der Schaltfeldanordnung 2a, aus der die Leitungen 4a, 4b, 4c der Sammelschiene 4 aus dem Gasbehälter 3 herausgeführt sind, weist im Bereich der Leitungen 4a, 4b, 4c drei Vertiefungen 12 auf, in die jeweils eine der Leitungen 4a, 4b, 4c der Sammelschiene 4 mündet (vgl. Fig. 5b) . Die Enden der in die Vertiefungen 12 mündenden Leitungen 4a, 4b, 4c der Sammelschiene 4 schließen bündig mit der die Vertiefungen 12 umgebenden Wand 3a des Gasbehälters 3 ab.

In der Verbindungsöffnung 10 ist an den elektrischen Verbindungsstellen 11 für jede Leitung 4a, 4b, 4c ein Kontaktelement 13 zur Herstellung einer elektrisch leitenden Verbindung zwischen den Enden der Leitungen 4a, 4b, 4c der Sammelschiene 4 der Schaltfeldanordnung 2a und den Enden der Leitungen 4a, 4b, 4c der Sammelschiene 4 der benachbarten Schaltfeldanordnung 2b angeordnet. Das Kontaktelement 13 besteht aus einem elektrisch leitenden Material. Es ist als eine Rohrleitung ausgebildet, die der Länge nach in zwei Rohrleitungssegmente 13a, 13b unterteilt ist. Die Rohrleitungssegmente 13a, 13b sind auf den Leitungen 4a, 4b, 4c der Sammelschienen 4 der benachbarten Schaltfeldanordnungen 2a, 2b axial verschiebbar und federnd verspannt angeordnet.

Die benachbarten Schaltfeldanordnungen 2a, 2b sind an den mechanischen Verbindungsstellen 7 derart miteinander mechanisch verbunden, dass die Gasbehälter 3 der Schaltfeldanordnungen 2a, 2b über die Verbindungsöffnung 10 mit den Vertiefungen 12 gasdicht in Verbindung steht. Zur mechanischen Verbindung der benachbarten Schaltfeldanordnungen 2a, 2b werden Verbindungselemente 14 verwendet. Die Verbindungse]emente 14 sind vorzugsweise als Schrauben ausgebildet. Zwischen einer Wand 3b des Gasbehälters 3 der Schaltfeldanordnung 2a und der Wand 3a des Gasbehälters 3 der benachbarten Schaltfeldanordnung 2b ist um die Verbindungsöffnung 10 und um die Vertiefungen 12 herum ein Dichtungselement 15 angeordnet. Das Dichtungselement 15 ist derart zwischen den Wänden 3a und 3b eingespannt, dass der Gasbehälter 3 der Schaltfeldanordnung 2a durch die Wand 3a des Gasbehälters 3 der benachbarten Schaltfeldanordnung 2b gasdicht verschlossen ist (vgl. Fig. 4)

Die Wand 3b auf einer der Seite 6 des Gasbehälters 3 gegenüberliegenden Seite 5 ist außen um die mechanische Verbindungsstelle 7 herum teilweise als ein nachgiebiger Bereich 16 ausgebildet. Der nachgiebige Bereich 16 der Wand 3b umgibt die mechanische Verbindungsstelle 7 kranzfärmig. Er besteht aus einem dünnen Blech mit einem in radialer Richtung wellenförmigen Profil. Der kranzförmige nachgiebige Bereich 16 ist in einer Öffnung in der Wand 3b des Gasbehälters 3 der Schatlfeldanordnung 2a ausgebildet.

Der nachgiebige Bereich 16 ist an seinem äußeren Rand mit dem Rand der Öffnung in der Wand 3b verschweißt. An seinem inneren Rand ist der nachgiebige Bereich 16 an der mechanischen Verbindungsstelle 7 befestigt. Das kann bspw. mittels einer Schweißverbindung oder einer Klemmverbindung erfolgen. Entscheidend ist, dass der nachgiebige Bereich 16 gasdicht zwischen der mechanischen Verbindungsstelle 7 und der Wand 3b des Gasbehälters 3 befestigt ist.

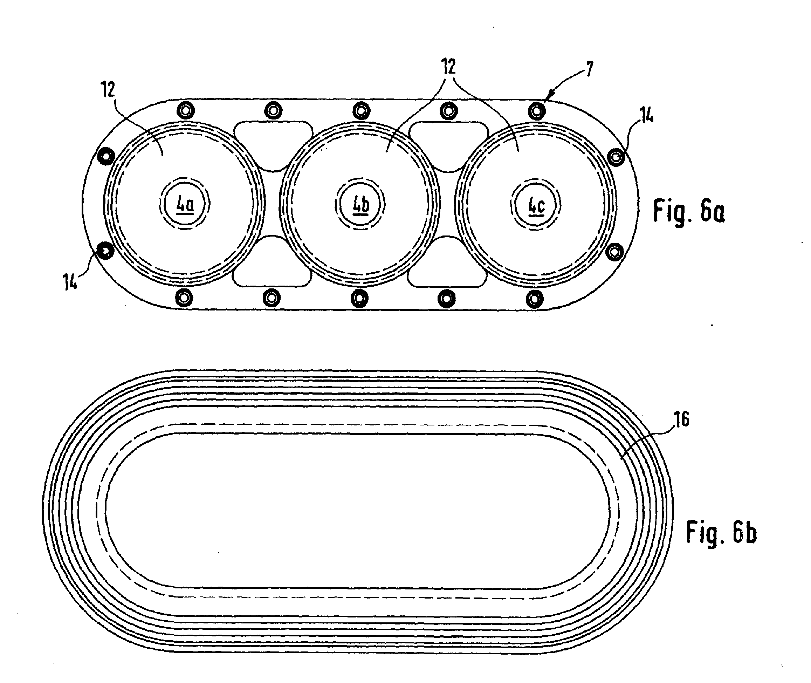

In den Fig. 5a bis 5c sind die drei Leitungen 4a, 4b, 4c der Sammelschiene 4 dargestellt, wie sie seitlich an der Wand 3a der Schaltfeldanordnungen 2 aus den Gasbehältern 3 heraustreten. Die Leitungen 4a, 4b, 4c der Sammelschiene 4 münden jeweils in eine gesonderte Vertiefung 12. Die Verbindungselemente 14 sind rings um die Vertiefungen 12 herum angeordnet und bilden die mechanische Verbindungsstelle 7. Rings um die Verbindungsstelle 7 ist der kragenförmige nachgiebige Bereich 16 angeordnet (vgl. Fig. 6b).

Es ist auch denkbar, dass die Verbindungselemente 14 jeweils rings um die Vertiefungen 12 herum angeordnet sind und mehrere mechanische Verbindungsstellen 7 bilden. Dann könnte jeweils ein kranzförmiger nachgiebiger Bereich 16 um jede verbindungsstelle 7 angeordnet sein.

## Patentansprüche

1. Gasisolierte Schaltanlage (1), insbesondere für mehrphasige Mittelspannungen, mit mindestens zwei nebeneinander angeordneten Schaltfeldanordnungen (2a, 2b), die jeweils einen mit Isoliergas gefüllten gasdichten Gasbehälter (3) aufweisen, in dem Schaltelemente und mindestens eine Stromschiene (4) angeordnet sind, wobei die Gasbehälter (3) von benachbarten Schaltfeldanordnungen (2a, 2b) über mindestens eine mechanische Verbindungsstelle (7) gasdicht miteinander verbunden sind, wobei die Verbindungsstelle (7) mit einem nachgiebigen Bereich versehen ist, **dadurch gekennzeichnet, dass** die mindestens eine mechanische Verbindungsstelle (7) zwischen zwei Schaltfeldanordnungen (2a, 2b) zwischen einer Wand (3a) des Gasbehälters (3) der einen Schaltfeldanordnung (2b) und einer Wand (3b) des Gasbehälters (3) der anderen Schaltfeldanordnung (2a) ausgebildet ist, und dass zumindest in einer der Wände (3a, 3b) um die mechanische Verbindungsstelle (7) herum zumindest teilweise der nachgiebige Bereich (16) ausgebildet ist, der sich im wesentlichen in radialer Richtung um die mechanische Verbindungsstellen (7) herum erstreckt.

2. Schaltanlage (1) nach Anspruch 1, **dadurch gekennzeichnet, dass** der nachgiebige Bereich (16) elastisch nachgiebig ausgebildet ist.

3. Schaltanlage (1) nach Anspruch 1 oder 2, **dadurch gekennzeichnet, dass** die Wand (3b) des Gasbehälters (3) der Schaltfeldanordnung (2a) einen kranzförmigen nachgiebigen Bereich (16) aufweist, der um alle mechanischen Verbindungsstellen (7) zwischen den zwei nebeneinander angeordneten Schaltfeldanordnungen (2a, 2b) herum verläuft.

4. Schaltanlage (1) nach Anspruch 1 oder 2, **dadurch gekennzeichnet, dass** die Wand (3b) des Gasbehälters (3) der Schaltfeldanordnung (2a) um jede mechanische Verbindungstelle (7) zwischen zwei nebeneinander angeordneten Schaltfeldanordnungen (2a, 2b) herum jeweils einen kranzförmigen nachgiebigen Bereich (16) aufweist.

5. Schaltanlage (1) nach Anspruch 3 oder 4, **dadurch gekennzeichnet, dass** der kranzförmige nachgiebige Bereich (16) ein sich radial nach außen erstreckendes wellenförmiges Profil aufweist.

6. Schaltanlage (1) nach einem der Ansprüche 3 bis 5, **dadurch gekennzeichnet, dass** der kranzförmige nachgiebige Bereich (16) aus einem dünnen Blech besteht.

7. Schaltanlage (1) nach Anspruch 6, **dadurch gekennzeichnet, dass** das dünne Blech des nachgiebigen kranzförmigen Bereichs (16) in einer entsprechenden Öffnung der Wand (3b) angeordnet und an dem Rand der Öffnung verschweißt ist.

8. Schaltanlage (1) nach Anspruch 6 oder 7, **dadurch gekennzeichnet, dass** das dünne Blech des nachgiebigen kranzförmigen Bereichs (16) an der mechanischen Verbindungsstelle (7) mit der Wand (3b) verschweißt ist.

9. Schaltanlage (1) nach Anspruch 6 oder 7, **dadurch gekennzeichnet, dass** das dünne Blech des nachgiebigen kranzförmigen Bereichs (16) an der mechanischen Verbindungsstelle (7) an der Wand (3b) eingeklemmt ist.

## Claims

1. Gas-insulated switchgear (1), in particular for multiphase medium voltages, comprising at least two switch panel arrangements (2a, 2b) which are arranged side by side and in each case have a gas-tight gas container (3) which is filled with insulating gas and in which switching elements and at least one busbar (4) are arranged, the gas containers (3) of adjacent switch panel arrangements (2a, 2b) being connected gas tight to one another via at least one mechanical connecting point (7), the connecting point (7) being provided with a pliant region, **characterized in that** the at least one mechanical connecting point (7) is formed between two switch panel arrangements (2a, 2b) between a wall (3a) of the gas container (3) of one switch panel arrangement (2b) and a wall (3b) of the gas container (3) of the other switch panel arrangement (2a) and **in that** the pliant region (16), which extends substantially in the radial direction around the mechanical connecting points (7), is formed at least partly around the mechanical connecting point (7) at least in one of the walls (3a, 3b).

2. Switchgear (1) according to Claim 1, **characterized in that** the pliant region (16) is elastically pliant.

3. Switchgear (1) according to Claim 1 or 2, **characterized in that** the wall (3b) of the gas container (3) of the switch panel arrangement (2a) has an annular pliant region (16) which runs around all mechanical connecting points (7) between the two switch panel arrangements (2a, 2b) arranged side by side.

4. Switchgear (1) according to Claim 1 or 2, **characterized in that** the wall (3b) of the gas container (3) of the switch panel arrangement (2a) has in each case an annular pliant region (16) around each mechanical connecting point (7) between two switch panel arrangements (2a, 2b) arranged side by side.

5. Switchgear (1) according to Claim 3 or 4, **characterized in that** the annular pliant region (16) has a wavy profile extending radially outwards.

6. Switchgear (1) according to any of Claims 3 to 5, **characterized in that** the annular pliant region (16) consists of a thin metal sheet.

7. Switchgear (1) according to Claim 6, **characterized in that** the thin metal sheet of the pliant annular region (16) is arranged in a corresponding opening of the wall (3b) and welded to the edge of the opening.

8. Switchgear (1) according to Claim 6 or 7, **characterized in that** the thin metal sheet of the pliant annular region (16) is welded to the wall (3b) at the mechanical connecting point (7).

9. Switchgear (1) according to Claim 6 or 7, **characterized in that** the thin metal sheet of the pliant annular region (16) is clamped to the wall (3b) at the mechanical connecting point (7).

## Revendications

1. Installation de commutation (1) isolée des gaz, en particulier pour des moyennes tensions multiphases, comportant au moins deux systèmes de tableau de commande (2a, 2b) juxtaposés, qui comportent chacun un réservoir de gaz (3) étanche aux gaz et rempli de gaz isolant, dans lequel sont disposés des éléments de commutation et au moins une barre conductrice (4), les réservoirs de gaz (3) de systèmes de tableau de commande (2a, 2b) adjacents étant reliés entre eux de manière étanche aux gaz par l'intermédiaire d'au moins un point d'assemblage (7) mécanique, ledit point d'assemblage (7) étant muni d'une zone flexible, **caractérisée en ce que** ledit au moins un point d'assemblage (7) est réalisé entre deux systèmes de tableau de commande (2a, 2b) entre une paroi (3a) du réservoir de gaz (3) de l'un des systèmes de tableau de commande (2b) et une paroi (3b) du réservoir de gaz (3) de l'autre système de tableau de commande (2a), et **en ce que** la zone flexible (16), qui s'étend sensiblement dans le sens radial autour des points d'assemblage (7) mécaniques, est réalisée au moins partiellement dans au moins l'une des parois (3a, 3b) autour du point d'assemblage (7) mécanique.

2. Installation de commutation (1) selon la revendication 1, **caractérisée en ce que** la zone flexible (16) est élastiquement flexible.

3. Installation de commutation (1) selon la revendication 1 ou 2, **caractérisée en ce que** la paroi (3b) du réservoir de gaz (3) du système de tableau de commande (2a) comporte une zone flexible (16) en forme de couronne, qui s'étend autour de tous les points d'assemblage (7) mécaniques entre les deux systèmes de tableau de commande (2a, 2b) juxtaposés.

4. Installation de commutation (1) selon la revendication 1 ou 2, **caractérisée en ce que** la paroi (3b) du réservoir de gaz (3) du système de tableau de commande (2a) comporte, autour de chaque point d'assemblage (7) mécanique entre deux systèmes de tableau de commande (2a, 2b) juxtaposés, respectivement une zone flexible (16) en forme de couronne.

5. Installation de commutation (1) selon la revendication 3 ou 4, **caractérisée en ce que** la zone flexible (16) en forme de couronne possède un profil ondulé qui est orienté radialement vers l'extérieur.

6. Installation de commutation (1) selon l'une quelconque des revendications 3 à 5, **caractérisée en ce que** la zone flexible (16) en forme de couronne est réalisée dans une tôle mince.

7. Installation de commutation (1) selon la revendication 6, **caractérisée en ce que** la tôle mince de la zone flexible (16) en forme de couronne est disposée dans une ouverture correspondante de la paroi (3b) et est soudée contre le bord de l'ouverture.

8. Installation de commutation (1) selon la revendication 6 ou 7, **caractérisée en ce que** la tôle mince de la zone flexible (16) en forme de couronne est soudée au niveau du point d'assemblage (7) mécanique contre la paroi (3b).

9. Installation de commutation (1) selon la revendication 6 ou 7, **caractérisée en ce que** la tôle mince de la zone flexible (16) en forme de couronne est serrée au niveau du point d'assemblage (7) mécanique contre la paroi (3b).
